# EUROPÄISCHE PATENTSCHRIFT

(11) **EP 3 281 267 B1**
(45) Veröffentlichungstag und Bekanntmachung des Hinweises auf die Patenterteilung: **25.12.2019**
(21) Anmeldenummer: 16716836.8
(22) Anmeldetag: 31.03.2016
(51) Int. Cl.: H02H 7/26, H02H 3/093, H02H 3/00

(54) **STROMVERTEILUNGSSYSTEM ZUM ANSCHLUSS AN EIN WECHSELSPANNUNGSNETZ**
POWER DISTRIBUTION SYSTEM FOR CONNECTION TO AN AC VOLTAGE NETWORK
SYSTÈME DE DISTRIBUTION D'ÉNERGIE DESTINÉ À ÊTRE RACCORDÉ À UN RÉSEAU DE TENSION ALTERNATIVE

(30) Priorität: 10.04.2015 DE 102015004633
(43) Veröffentlichungstag der Anmeldung: 14.02.2018
(73) Patentinhaber: Ellenberger & Poensgen GmbH, 90518 Altdorf (DE)
(72) Erfinder: FISCHER, Erich, 90518 Altdorf (DE); HARRER, Hubert, 91161 Hilpoltstein (DE); REGAHL, Thomas, 90409 Nürnberg (DE); PHAM, Thanh-Huy, 70499 Stuttgart (DE); ZEBERL, Jürgen, 92283 Lauterhofen (DE)
(74) Vertreter: FDST Patentanwälte
(86) Internationale Anmeldenummer: PCT/EP2016/057101
(87) Internationale Veröffentlichungsnummer: WO 2016/162266

(56) Entgegenhaltungen:
- EP-A1- 2 811 604
- EP-A2- 0 419 015
- DE-A1-102004 046 810
- DE-A1-102006 042 768
- DE-U1- 29 909 206

## Beschreibung

Die Erfindung betrifft ein Stromverteilungssystem zum Anschluss an ein Wechselspannungsnetz, mit einem Netzteil zur unterbrechungsfreien Stromversorgung mit einem netzseitigen Eingang und mit mindestens einem Ausgang, an welchem eine Anzahl von Lasten in parallelen Laststromkreisen angeschlossen oder anschließbar ist.

Eine nachfolgend auch als USV-Netzteil bezeichnete Anlage oder Vorrichtung zur unterbrechungsfreien Stromversorgung (Uninterruptible Power Supply, UPS) wird im Netzbetrieb vom angeschlossenen (öffentlichen) Wechselspannungsnetz (AC-Netz) gestützt. An ein solches, beispielsweise aus der EP 0419 015 A2 bekanntes USV-Netzteil angeschlossene Lasten werden entweder im Stromrichterbetrieb permanent über leistungselektronische Wandler oder bei üblicherweise nur kurzzeitigem Bypassbetrieb aus dem Wechselspannungsnetz direkt versorgt. Der Stromrichterbetrieb erfolgt über einen einem netzseitigen AC-DC-Wandler (Gleichrichter) nachgeschalteten und ausgangs- oder lastseitig einem DC-AC-Wandler (Wechselrichter) vorgeschalteten Gleichstromzwischenkreis, in den Pufferbatterien oder -akkumulatoren geschaltet sind.

Liegt eine Unterbrechung des öffentlichen Wechselspannungsnetzes vor, so wechselt das USV-Netzteil in den Batteriebetrieb und wird anschließend von der integrierten Pufferbatterie (Pufferakkumulator) für einen begrenzten Zeitraum versorgt. Bedingt durch die elektrischen Eigenschaften der in das USV-Netzteil integrierten Komponenten ist die im Batteriebetrieb des USV-Netzteils entnehmbare Leistung und damit auch der maximal fließende Strom begrenzt. Über gestaffelte Zeiträume von bis zu mehreren Minuten kann ein entsprechend gestaffelter Überstrom, der typischerweise auch größer als 100% des Nennstroms der angeschlossenen Last bzw. eines angeschlossenen Gerätes betragen kann, aus dem USV-Netzteil bezogen werden. Unter Nennstrom wird bei elektrischen Geräten (Lasten) die aufgenommene elektrische Stromstärke verstanden, wenn das Gerät (die Last) mit der Nennspannung versorgt wird und dessen Nennleistung abgibt.

Für kürzere Zeiträume wird dabei ein höherer Überstrom zugelassen, als für längere Zeiträume. Normgemäß ist in Datenblättern derartiger USV-Netzteile der zeitlich begrenzte Maximalstrom (Maximallast) angegeben, über welchen die Ausgangsspannung des USV-Netzteils innerhalb der Grenzen nach DIN EN 62040-3 (Abs. 5.3.4) aufrechterhalten bleibt. Üblich ist ein Maximalstrom von 150% bis 200% des Nennstroms im Zeitraum weniger Sekunden bis einiger Minuten. Damit kann jedoch nur für kurze Zeit ein höherer Strom aus dem USV-Netzteil bezogen werden, etwa um Lasten bzw. Geräte einzuschalten.

Weiterhin wird bei solchen USV-Netzteilen der spezifische maximale Kurzschlussstrom angegeben. Dieser liegt üblicherweise bei 200% bis 300% des Nennstroms für einige Millisekunden. Tritt im Batteriebetrieb des USV-Netzteils ein Kurzschluss innerhalb eines ausgangsseitig an das USV-Netzteil angeschlossenen Lastzweiges oder Laststromkreises auf, so ist der Kurzschlussstrom durch die Ausgangsleistung des USV-Netzteils limitiert. Dieser Kurzschlussstrom ist häufig nicht ausreichend, um einen klassischen Schutzschalter, insbesondere einen elektromechanischen Leitungsschutzschalter nach dem magnetischen Prinzip, also beispielsweise einen thermisch-magnetischen Schutzschalter, auszulösen. Infolgedessen würde die Leistungsgrenze des USV-Netzteils überschritten und demzufolge die Ausgangsspannung zusammenbrechen. Damit würde jedoch auch die Versorgung anderer, fehlerfreier Lastzweige bzw. Laststromkreise unterbrochen, indem das USV-Netzteil zum Selbstschutz ausschaltet und dabei deren Ausgangsspannung abschaltet. Ein selektives Abschalten lediglich eines fehlerbehafteten Lastzweiges oder Laststromkreises kann das USV-Netzteil nicht leisten.

Ein Einschalten von Lasten genügt häufig bereits, um die Leistungsgrenze des USV-Netzteils zu überschreiten. Daher schaltet dieses selbständig in den Netzbetrieb (Bypassbetrieb) um. Der Einschaltstrom wird dann aus dem Wechselspannungsnetz gestützt und kann höhere Werte annehmen, als dies im Stromrichterbetrieb möglich ist. Die Ausgangsspannung des USV-Netzteils bleibt nun aufrechterhalten, wobei der Strom lediglich durch eine vorgeschaltete Schmelzsicherung oder durch eine lastzweigseitige Absicherung begrenzt wird, welche beim Überschreiten der jeweiligen Kennlinie entsprechend auslösen würde.

Würde die Absicherung von an ein solches USV-Netzteil angeschlossenen Lasten (Geräten) durch Leitungsschutzschalter mit sogenannter B- oder C-Charakteristik (IEC 60898) realisiert, so würde die Absicherung typischerweise an den üblichen Installationsvorgaben für den Leitungsschutz im Haus- und Industriebetrieb orientiert sein. Da jedoch eine magnetische Auslösung eines solchen Leitungsschutzschalters im Batteriebetrieb nur dann erfolgen kann, wenn der Kurzschlussstrom des USV-Netzteils zur Auslösung des Leitungsschutzschalters ausreichend ist, müsste praktisch zwingend eine Überdimensionierung des USV-Netzteil vorgenommen werden, mit welcher der zur Auslösung des Leitungsschutzschalters benötigte Kurzschlussstrom geliefert werden kann, ohne dass das USV-Netzteil zum Selbstschutz vor Erreichen des entsprechenden Stromwertes ausschaltet und deren Ausgangsspannung abschaltet.

Der Erfindung liegt daher die Aufgabe zugrunde, ein Stromverteilungssystem der eingangs genannten Art anzugeben, dass ein selektives Auslösen eines dem Netzteil zur unterbrechungsfreien Stromversorgung (USV-Netzteil) ausgangsseitig nachgeschalteten Schutzschalters im Überlast- und/oder Kurzschlussfall sicherstellt, ohne hierzu ein leistungsmäßig überdimensioniertes USV-Netzteil einzusetzen.

Diese Aufgabe wird erfindungsgemäß gelöst durch ein Stromverteilungssystem mit den Merkmalen des Anspruchs 1. Vorteilhafte Ausgestaltungen und Weiterbildungen sin Gegenstand der Unteranasprüche.

Hierzu umfasst das zum Anschluss an ein Wechselspannungsnetz vorgesehene Stromverteilungssystem ein Netzteil zur unterbrechungsfreien Stromversorgung (USV-Netzteil) mit einem netzseitigen Eingang und mit mindestens einem Ausgang, an welchen eine Anzahl von Lasten in parallelen Laststromkreisen angeschlossen oder anschließbar sind. In den oder jeden Laststromkreis ist ein Schutzgerät mit einem elektromechanischen, vorzugsweise thermisch-magnetischen, Auslöser und mit einer Auswerte- und Auslöseeinheit geschaltet. Die in das Schutzgerät integrierte oder diesem in Form eines Elektronikmoduls zugeordnete, vorzugsweise elektronische, Auswerte- und Auslöseeinheit betätigt das Schutzgerät bzw. löst dessen Auslöser anhand einer stromabhängigen Auslösecharakteristik in Form einer elektronischen Überlast- und/oder Kurschluss-Kennlinie und in Abhängigkeit von der Ausgangsspannung des USV-Netzteils aus. Das Schutzgerät bzw. dessen Auslöser weist geeigneterweise die thermisch-magnetischen Eigenschaften eines Leitungs- und/oder Geräteschutzschalter mit B- oder C-Charakteristik auf. Gemäß IEC 60898 wird unter B-Charakteristik der Standard-Leitungsschutz und unter C-Charakteristik ein Leitungsschutz für höhere Einschaltströme, wie beispielsweise bei Maschinen oder Lampengruppen, verstanden.

In einer bevorzugten Ausgestaltung sind der Auswerte- und Auslöseeinheit die netzteilseitig, vorzugsweise im Schutzgerät, erfasste Ausgangsspannung des USV-Netzteils und der in einem Auslösepfad zwischen dem netzteilseitigen Ausgang des USV-Netzteils und einem Lastausgang des Schutzgerätes erfasste Strom zugeführt. Vorzugsweise löst die Auswerte- und Auslöseeinheit das Schutzgerät aus, wenn der erfasste Strom einen vorgegebenen Stromwert überschreitet und die erfasste Ausgangsspannung des USV-Netzteils einen vorgegebenen Spannungswert unterschreitet.

Bei einem Netzausfall schaltet das USV-Netzteil bestimmungsgemäß in den Batteriebetrieb um, so dass ein Bypassbetrieb nun nicht mehr möglich ist. Sollte im Batteriebetrieb ein höherer Strom notwendig sein, als durch kurzzeitige Überlastung des USV-Netzteils möglich ist, kann diese noch für kurze Zeit einen begrenzten Kurzschlussstrom liefern. In diesem Fall ist jedoch nicht mehr sichergestellt, dass die Ausgangsspannung des USV-Netzteils innerhalb der Grenzen des sicheren Betriebs verbleibt. Unter Umständen liegen infolgedessen weitere Verbraucher an Unterspannung und schalten sich ab. Sollte der hohe Strom, z.B. durch Kurzschluss einer angeschlossenen Last im jeweiligen Lastkreis, weiterhin fließen, würde auch das USV-Netzteil wegen dauerhafter Überlastung abschalten.

Die Erfindung geht von der Erkenntnis aus, dass durch die Kombination eines elektromechanischen, vorzugweise thermisch-magnetischen, Schutzgerätes, insbesondere eines Leitungsschutzschalters, mit einer Strom- und Spannungsauswertung eine Überdimensionierung des USV-Netzteils zur Erzeugung des erforderlichen Kurzschlussstroms bzw. des entsprechenden Stromwertes vermieden werden kann, indem nicht nur der aktuelle Laststrom (Ist-Strom) durch das Schutzgerät, sondern auch die Ausgangsspannung des USV-Netzteils erfasst und ausgewertet wird, welche netzteilseitige Ausgangsspannung gleichbedeutend mit der Spannung (Ist-Spannung) an der angeschlossenen Last ist.

Da ein USV-Netzteil normgemäß, insbesondere entsprechend dem zugehörigen USV-Datenblatt, Angaben über den Maximal- und Kurzschlussstrom sowie über die Qualität der Spannungserhaltung enthält, können die einem Anwender somit direkt zugänglichen Werte in die vorzugsweise elektronische Auswerte- und Auslöseeinheit des Schutzgerätes eingegeben werden. Der somit für das USV-Netzteil spezifische Wert des Maximalstroms dient dem Abgleich des erfassten Ist-Stroms mit einer von der Eingabe des spezifischen Wertes abhängigen Kennlinie. Diese Maximallast- oder Maximalstrom-Kennlinie ist geeigneterweise derart gestaltet, dass deren Zeit-Strom-Wertepaare kleiner oder identisch der Bemessungswerte des USV-Netzteils im Batteriebetrieb sind.

Wird diese eingestellte Kennlinie vom über das Schutzgerät, d. h. über dessen Auslösepfad fließenden Strom überschritten, so erfolgt die Auslösung des Schutzgerätes im betroffenen Lastkreis (Lastzweig) nur dann, wenn auch die erfasste Ausgangsspannung des USV-Netzteils des Stromverteilungssystems eine Spannungsgrenze bzw. einen Spannungsgrenzwert unterschreitet. Eine solche, wiederum in der DIN EN 62040-3 (Abs. 5.3.4) definierte Spannungsgrenze wird für das jeweils eingesetzte USV-Netzteil vorzugsweise ebenfalls der Auswerte- und Auslöseeinheit des vorzugsweise elektromechanischen Schutzgerätes als Spannungsgrenzwert für eine Maximallast zugeführt.

Demnach wird bei jeder Überschreitung der einprogrammierten Kennlinie, insbesondere Strom-Kennlinie, unterschieden, ob sich das USV-Netzteil im Netzbetrieb oder im Batteriebetrieb befindet. Dabei kann im Netzbetrieb ein höherer Strom (Kurzschlussstrom) zugelassen werden, ohne dass eine Auslösung des Schutzgerätes und somit eine Trennung des entsprechenden Lastkreises erfolgt. Die Trennung des fehlerhaften Lastzweiges erfolgt normgemäß in einer ausreichenden Zeit, so dass die Spannungsversorgung der anderen, fehlerhaften Lastzweige des Stromverteilungssystems stets sichergestellt ist.

Die Erfindung geht von der Überlegung aus, dass bei Einsatz lediglich eines klassischen bzw. normalen Leitungsschutzschalters im jeweiligen Laststromkreis eine genaue Schutzfunktion für die Absicherung der Last praktisch nicht hergestellt werden kann. Insbesondere für Lasten mit hohen Einschaltströmen ist die Verwendung von typischen Leitungsschutzschaltern denkbar ungeeignet, da die Spreizung zwischen Nennstrom und magnetischem Auslösestrom bei Leitungsschutzschaltern nicht zum Stromprofil dieser Lasten passt, selbst wenn ein solcher Leitungsschutzschalter mit C-Charakteristik verwendet wird.

Alternativ oder vorteilhafterweise zusätzlich zum Maximalstrom des USV-Netzteils wird auch der Nennstrom (Nennlast) der angeschlossenen Last bzw. des angeschlossenen Gerätes eingegeben. Anhand dieser Eingabe in die Auswerte- und Auslöseeinheit des Schutzgerätes wird eine Überlast-Kennlinie gebildet, deren Zeit-Strom-Wertepaare kleiner als diejenigen des USV-Netzteils, jedoch größer als die der angeschlossenen Last bzw. des angeschlossenen Gerätes im Normalbetrieb sind. Die Kennlinien von Überlast und Maximallast treffen sich in einem gemeinsamen Punkt bzw. Kennlinienbereich. Bei einer Überschreitung der resultierenden Kennlinie erfolgt die daraufhin von der Auswerte- und Auslöseeinheit initiierte Auslösung des Schutzgerätes unverzüglich, wobei unabhängig von der elektronischen Auslösung die Eigenschaften des Leitungsschutzes des Schutzgerätes stets erhalten bleiben.

Wird das USV-Netzteil über deren integrierten Stromrichter inklusive angeschlossenem Pufferakkumulator (Pufferbatterie) betrieben, so ist deren Leistungsfähigkeit begrenzt. Das Schutzgerät mit integrierter Auswerte- und Auslöseeinheit beinhaltet einen Leitungsschutzschalter, d. h. insbesondere einen thermisch-magnetischen Auslöser, und verfügt zusätzlich über eine elektronische Baugruppe als Auswerte- und Auslöseelektronik, welche die Überlastungssituation des USV-Netzteils detektiert und den Leitungsschutzschalter, d. h. den thermisch-magnetischen Auslöser entsprechend ansteuert, also quasi fernsteuert. Durch Eingabe zweier Stromparameter, nämlich eines Stromwertes (Stromgrenzwertes) zur Bestimmung der Lage der Geräte- bzw. Leitungsschutzkennlinie und eines Stromwertes (Stromgrenzwertes) zur Bestimmung der Lage der Geräte- bzw. Leitungsschutzkennlinie relativ zur USV-Überlastkennlinie in die Auswerte- und Auslöseeinheit des Schutzgerätes kann eine elektronische Kennlinie erzeugt werden.

Grundlage der Überlastdetektion des USV-Netzteils ist vorzugsweise ein softwaretechnisch realisierter Algorithmus, der im Wesentlichen eine Überwachung der Überstromsituation vornimmt. Eine Überschreitung der elektronischen Kennlinie im Kurzschlussbereich wird nur toleriert, wenn auch die Ausgangsspannung des USV-Netzteils noch aufrechterhalten bleibt. Wenn sowohl der Überstrom den Maximalstrom des USV-Netzteils im Batteriebetrieb überschritten hat, also auch die Ausgangsspannung des USV-Netzteils nicht mehr dem ordnungsgemäßen Betrieb entspricht, erfolgt eine Auslösung des Schutzschalters.

Ist das USV-Netzteil noch vom Wechselspannungsnetz versorgt, kann ein höherer Strom zum Einschalten über den Bypass bezogen werden. Das Schutzgerät wird hierbei nicht auslösen, weil der Auslösefall gemäß dem Algorithmus nicht aufgetreten ist. Im Kurzschlussfall kann der integrierte elektromechanische Auslöser des Schutzgerätes normal auslösen.

Ist hingegen das Wechselspannungsnetz ausgefallen, so fließt in diesem Fall aufgrund des Einschaltens der Last oder aufgrund eines Kurzschlusses im entsprechenden Lastkreis ein Strom, der an die Überlastgrenzen des USV-Netzteils heran reicht. Dies wirkt sich auf die Ausgangsspannung des USV-Netzteils aus, so dass somit ein Auslösefall gemäß dem Algorithmus vorliegt und die Trennung (Auslösung) durch den Schutzschalter erfolgt.

Auch kann der Effektivwert des Laststroms innerhalb ausgewählter Zeitintervalle berechnet und dahingehend geprüft werden, ob der Effektivwert des Stromes die Überlastkennlinie überschreitet. Überschreitet der Laststrom die Kennlinie eines der Intervalle, so erfolgt eine Auslösung des Schutzschalters.

Nachfolgend werden Ausführungsbeispiele der Erfindung anhand einer Zeichnung näher erläutert. Darin zeigen:
- Fig. 1: schematisch ein an ein Wechselspannungsnetz angeschlossenes Stromverteilungssystem mit einer Anzahl von mittels eines USV-Netzteils unterbrechungsfreie versorgten Lastkreisen mit jeweils einem elektromechanischen Schutzschalter zum Schutz gegen Überlast und Kurzschluss,
- Fig. 2: schematisch den Schutzschalter mit thermisch-magnetischem Auslöser sowie mit einer Auswerte- und Auslöseeinheit (Elektronik) und mit einer Strom- und Spannungsmessung,
- Fig. 3: schematisch einen in die Auswerte- und Auslöseeinheit implementierten Algorithmus zur Bestimmung eines Auslösefalls, und
- Fig. 4: den elektronischen und B-charakteristischen Kennlinienverlauf des Schutzschalters bei Batteriebetrieb des USV-Netzteils,

Einander entsprechende Teile sind in allen Figuren mit den gleichen Bezugszeichen versehen.

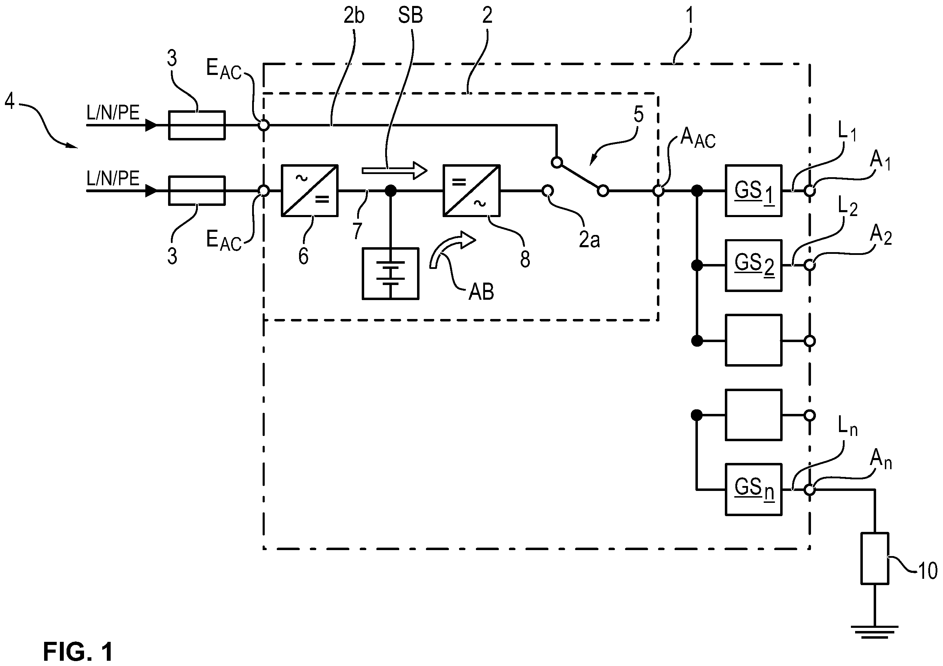

Fig. 1 zeigt schematisch ein Stromverteilungssystem 1 mit einer nachfolgend als USV-Netzteil 2 bezeichneten unterbrechungsfreien Stromversorgung, welches bzw. welche über Wechselspannungseingänge E_{AC} und diesen im Ausführungsbeispiel vorgeordneten Schmelzsicherungen 3 an ein Wechselspannungsnetz (L,N,PE) 4 angeschlossen ist. Das USV-Netzteil 2 weist einen Stromrichterpfad 2a und einen Bypasspfad 2b auf. Eine Umschalteinrichtung 5, beispielsweise in Form eines Schaltschützes oder einer Schaltelektronik, ermöglicht die Umschaltung zwischen dem Stromrichterpfad 2a und dem Bypasspfad 2b sowie deren Aufschaltung auf einen lastseitigen Wechselspannungsausgang A_{AC} des USV-Netzteils 2.

Der Stromrichterpfad 2a des USV-Netzteils 2 ist im Wesentlichen gebildet durch einen netzseitigen AC-DC-Wandler (Gleichrichter) 6 und einen diesem nachgeordneten Gleichstromzwischenkreis 7 sowie einem diesem wiederum nachgeordneten DC-AC-Wandler (Wechselrichter) 8. In den Gleichstromzwischenkreis 7 ist eine Batterie bzw. ein Akkumulator 9 geschaltet. Der Stromrichterbetrieb des USV-Netzteils 2 ist durch den mit SB bezeichneten Pfeil symbolisiert, während der auch als autonomer Betrieb bezeichnete Batteriebetrieb des USV-Netzteils 2 mit dem mit AB bezeichneten Pfeil symbolisiert ist.

An den Wechselspannungsausgang A_{AC} des USV-Netzteils 2 sind eine Anzahl von Laststromkreisen Lₘ mit m = 1, 2, ..., n zueinander parallel angeschlossen. Im Ausführungsbeispiel ist in jeden Laststromkreis Lₘ ein elektromechanisches Schutzgerät GSₘ mit m = 1, 2, ..., n, insbesondere ein thermisch-magnetischer Leitungsschutzschalter mit B-Charakteristik, geschaltet. In dem oder jedem Laststromkreis Lₘ befindet sich eine Last 10, welche über einen entsprechenden Ausgang Aₘ des Stromverteilungssystems 1 an das jeweilige Schutzgerät GSₘ geführt ist. Die Last 10 repräsentiert beispielsweise ein von dem Stromverteilungssystem 1 versorgtes Gerätes.

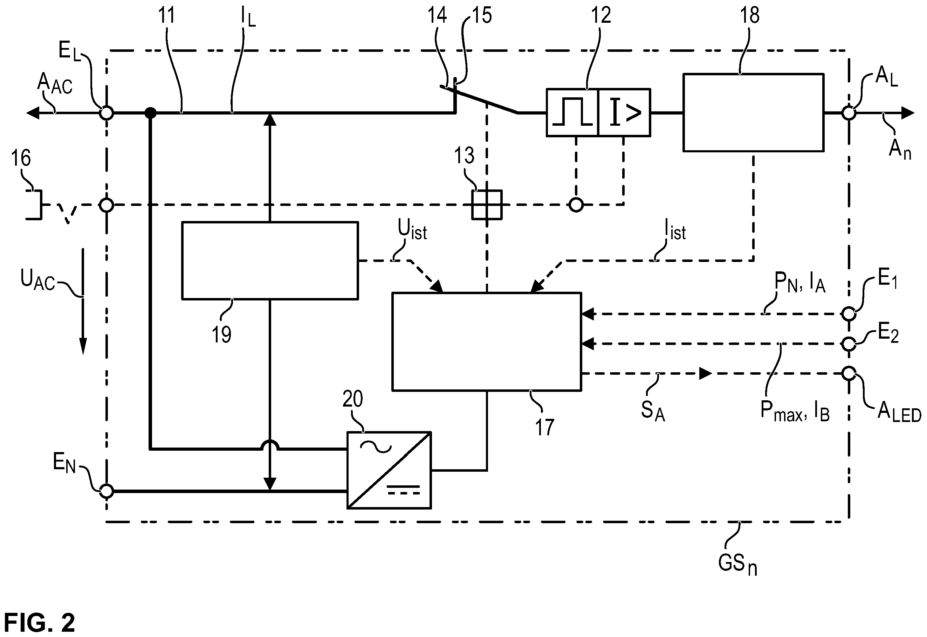

Den Aufbau bzw. die Funktionskomponenten des jeweiligen elektromechanischen Schutzgerätes GSₘ zeigt Fig. 2. In einem Auslösepfad 11 zwischen dem mit dem Wechselspannungsausgang A_{AC} verbundenen LINE-Eingang E_{L} und einem an den Lastausgang Aₙ des Stromverteilungssystems 1 geführten oder diesen bildenden Ausgang A_{L} des Schutzgerätes GSₘ sind ein thermisch-magnetischer Auslöser 12 und die von diesem über ein Schaltschloss 13 betätigten Schaltkontakte 14, 15 geschaltet. Das Schaltschloss 13 kann beispielsweise auch mittels eines Tasters oder Schalthebels 16 von außen manuell betätigt, also beispielsweise eingeschaltet oder ausgelöst (EIN/AUS) werden. Der Auslöser 12, das Schaltschloss 13 und die Schaltkontakte 14, 15 bilden quasi den elektromechanischen Leitungs- bzw. Geräteschutzschalter des Schutzgerätes GSₘ.

Das Schutzgerät GSₘ weist eine nachfolgend als Schalterelektronik oder einfach als Elektronik bezeichnete elektronische Auswerte- und Auslöseeinheit 17 auf, die in das Schutzgerät GSₘ integriert oder diesem als Elektronikmodul, beispielsweise auch in einem separaten Modulgehäuse, zugeordnet ist. Der Elektronik 17 wird der über den Auslösepfad 11 des Schutzgerätes GSₘ fließende und von einem Stromsensor 18 gemessene Laststrom I_{L} als Ist-Strom Iᵢₛₜ zugeführt. Die Strommessung erfolgt vorzugsweise berührungslos und insbesondere induktiv. Der Elektronik 17 wird zudem die zwischen dem Eingang E_{L} und einem weiteren Eingang E_{N} des Schutzgerätes GSₘ mittels einer Spannungs-Messeinrichtung 19 erfasste Ausgangsspannung U_{AC} des USV-Netzteils 2 als Ist-Spannung Uᵢₛₜ zugeführt.

Die Spannungsversorgung der Elektronik 17 erfolgt mittels eines Netzteils 20 in Form eines AC-DC-Wandlers (Gleichrichter), der wechselspannungsseitig an die Eingänge E_{L} und E_{N} sowie gleichspannungsseitig mit der Elektronik 17 verbunden ist. Der Elektronik 17 werden zudem über Eingabeeingänge E₁ und E₂ ein last- bzw. gerätespezifischer und dessen Nennlast angebender Parameter P_{N} und ein die Maximallast des USV-Netzteils 2 charakterisierender Parameter Pₘₐₓ durch entsprechende Parametereingabe zugeführt. Auch können direkt Stromparameter I_{A} bzw. I_{B} in die Elektronik 17 eingegeben werden

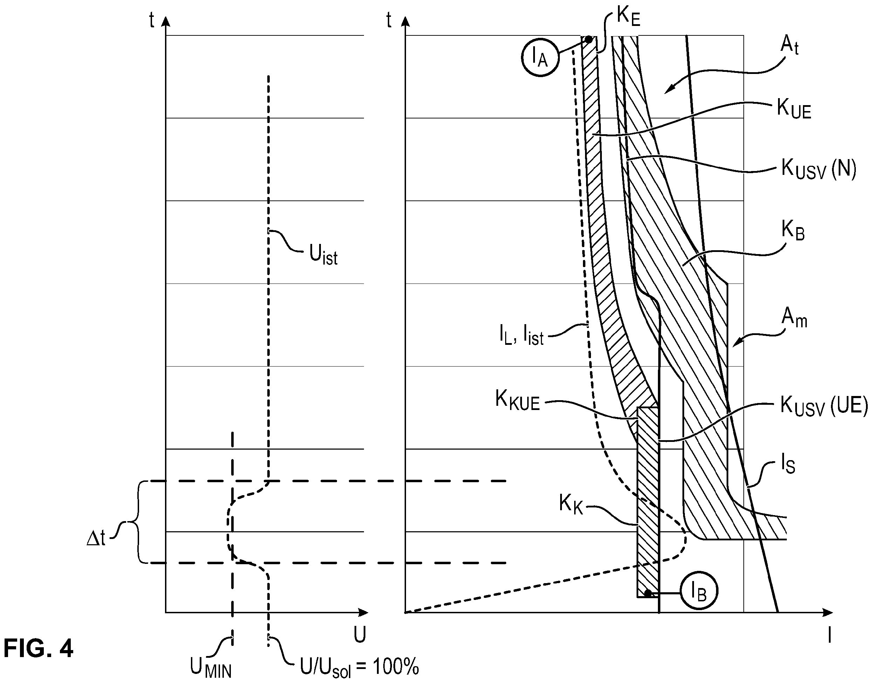

Der aus der Eingabe des Parameters P_{N} resultierende oder direkt eingegebene Stromwert I_{A} bestimmt die Lage einer in Fig. 4 gezeigten elektronischen Überlast-Kennlinie K_{UE} bzw. eines entsprechenden Kennlinienbereiches des Schutzgerätes GSₘ, während die Eingabe des netzteilspezifischen Parametes Pₘₐₓ bzw. I_{B} die Lage einer elektronischen Kurschluss-Kennlinie K_{K} bzw. eines entsprechenden Kennlinienbereiches für den USV-Schutz des USV-Netzteils 2 bestimmt. Die Kennlinienbereiche K_{UE} und K_{K} bilden die in Fig. 4 gezeigte elektronische Kennlinie K_{E} bzw. den entsprechenden Kennlinienbereich des Schutzgerätes GSₘ. Die Voreinstellung mittels des Parameters Pₘₐₓ bzw. I_{B} erfolgt geeigneterweise anhand des Datenblattes für das USV-Netzteil 2 bezüglich des Kurzschlussstroms.

Die Elektronik 17 liefert im Ausführungsbeispiel ein Anzeigesignal S_{A} an einen Ausgang A_{LED} des Schutzschalters zur Ansteuerung beispielsweise einer Leuchtanzeige (LED) oder dergleichen.

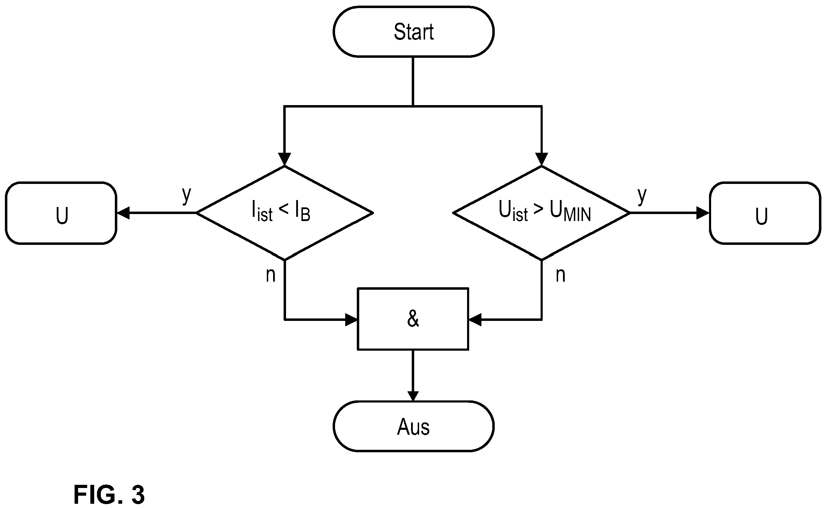

Fig. 3 veranschaulicht in Verbindung mit den Diagrammen in Fig. 4 den softwaremäßig in die Elektronik 17 implementierten Auslösealgorithmus des Schutzgerätes GSₘ. Fig. 4 zeigt in der rechten Figurenhälfte in einem Zeit-Strom Diagramm den für die Einschaltkennlinie der Last 10 typischen Verlauf des Ist-Stromes lᵢₛₜ. Zwischen einer für das USV-Netzteil 2 typischen, netzteilspezifischen Nenn- und Überlastkennlinie K_{USV} mit einem Nenn- und Überlastbereich K_{KSU}(N) bzw. K_{KSU}(UE) und dem Verlauf des Ist-Stromes Iᵢₛₜ sind eine elektronische Kennlinie K_{K} der Elektronik 17 als Kurzschlussbereich und eine elektronische Kennlinie K_{UE} der Elektronik 17 als Überlastbereich jeweils gestrichelt veranschaulicht. Die B-Auslösecharakteristik des Auslösers 12 des Schutzgerätes GSₘ als Leitungs- und/oder Geräteschutzes veranschaulicht der Kennlinienbereich K_{B} mit dessen thermischem Überlast-Auslösebereich Aₜ und dessen magnetischem Kurzschluss-Auslösebereich Aₘ. Die mit I_{S} bezeichnete Kennlinie repräsentiert den Schmelzstrom der dem USV-Netzteil 2 vorgeschalteten Schmelzsicherungen 3. In dem mit K_{KUE} bezeichneten Punkt oder Kennlinien- oder Übergangsbereich treffen sich die elektronische Kennlinie K_{UE} für Überlast und die die Maximallast Pₘₐₓ, I_{B} des USV-Netzteils 2 im Kurzschlussfall repräsentierende elektronische Kennlinie K_{K} der Auswerte- und Auslöseeinheit 17 des Schutzgerätes GSₘ.

Mit dem Beginn (Start) des Prüfzyklus des in Fig. 3 veranschaulichten Algorithmus erfolgt in oder mittels der Elektronik 17 anhand des implementierten Algorithmus einerseits ein Vergleich des erfassten Ist-Stroms Iᵢₛₜ mit dem die Lage der USV-Schutz-Kennlinie K_{USV} bzw. die elektronische Kennlinien K_{K} für den Kurschlussbereich angebenden Stromparameter I_{B}. Zudem kann ein Vergleich des zeitlichen Verlaufs der Ist-Spannung Uᵢₛₜ der erfassten Ausgangsspannung U_{AC} des USV-Netzteils 2 mit einem aus dem Parameter Pₘₐₓ für die Maximallast des USV-Netzteils 2 abgeleiteten Spannungswertes U_{MIN} erfolgen (U_{MIN} = Pₘₐₓ/I_{B}). U_{MIN} kann auch der Norm DIN EN 62040-3 für die unterbrechungsfreie Stromversorgung und/oder dem Datenblatt des USV-Netzteils 2 entnommen werden.

Überschreitet während eines in Fig. 4 veranschaulichten Zeitintervalls Δt für eine maximale Zeitdauer Δt ≥ tₘₐₓ, mit beispielsweise tₘₐₓ = 1 ms, der erfasste Ist-Strom Iᵢₛₜ den durch den Stromparameter oder Stromwert I_{B} vorgegebenen Kennlinienbereich K_{K}, K_{USV} und unterschreitet hierbei die erfasste Ist-Spannung Uᵢₛₜ und damit die Ausgangsspannung U_{AC} des USV-Netzteils 2 den vorgegebenen Spannungs- bzw. Minimalwert U_{MIN}, so erfolgt die Auslösung des Schutzgeräte GSₘ durch entsprechendes Öffnen der Schaltkontakte 14, 15 infolge einer entsprechenden Auslösung (Aus) des Auslösers 12 direkt oder indirekt über das Schaltschloss 13 aufgrund einer entsprechenden Initiierung durch die bzw. von der Elektronik 17. Andernfalls wird auf einen mit u bezeichneten unkritischen Betrieb erkannt.

Fig.4 veranschaulicht in der linken Figurenhälfte den Spannungs-Zeit-Verlauf des erfassten Ist-Wertes Uᵢₛₜ der Ausgangsspannung U_{AC} als Kennlinienverlauf des USV-Netzteils 2 im Batteriebetrieb AB. Im Stromrichterbetrieb SB bzw. bei optionaler Umschaltung auf den Bypasspfad 2b des USV-Netzteils 2 wäre während des Zeitintervalls Δt kein Spannungseinbruch der Ausgangsspannung U_{AC} des USV-Netzteils 2 und somit kein Unterschreiten der Ist-Spannung Uᵢₛₜ unter den Minimal- oder Schwellwert U_{MIN} zu erwarten. Der angegebene Wert U/Uₛₒₗ = 100% ohne Spannungseinbruch im Zeitintervall Δt repräsentiert die entsprechende Kennlinie bei Stromrichterbetrieb oder Bypassbetrieb.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen. So kann beispielsweise die Anzahl der angeschlossenen Lastkreise des Stromverteilungssystems 1 auch eins (1) betragen.

### Bezugszeichenliste

- 1: Stromverteilungssystem
- 2: Netzteil/USV
- 2a: Bypass
- 2b: Stromrichter
- 3: Schmelzsicherung
- 4: Wechselspannungsnetz
- 5: Wechselschalter/Schaltschütz
- 6: AC/DC-Wandler
- 7: Gleichstromzwischenkreis
- 8: DC/AC-Wandler
- 9: Batterie-Akkumulator
- 10: Gerät/Last
- 11: Auslösepfad
- 12: thermisch-magnetischer Auslöser
- 13: Schaltschloss
- 14: Schaltkontakt
- 15: Schaltkontakt
- 16: Taster/Schalthebel
- 17: Auslöse-/Auswerteeinheit / Elektronik
- 18: Stromsensor
- 19: Messvorrichtung
- 20: Netzteil

- AB: Batteriebetrieb
- A_{AC}: Wechselspannungsausgang
- A_{LED}: Ausgang
- Aₙ: Lastausgang
- Aₘ: Kurzschluss-Auslösebereich
- Aₜ: Überlast-Auslösebereich
- E_{L}: LINE-Eingang
- E_{N}: N-Eingang
- E₁: Nennlast-Eingabeeingang
- E₂: Maximallast-Eingabeeingang
- GSₘ: Schutzgerät
- I_{A}: Nennlast-Stromwert/-parameter
- I_{B}: Maximallast-Stromwert/-parameter
- I_{L}: Laststrom
- Iᵢₛₜ: Ist-Strom
- I_{S}: Schmelzstrom-Kennlinie
- K_{USV}: USV-Kennlinie
- K_{B}: Kennlinienbereich
- K_{E}: elektronische Kennlinie/-bereich
- K_{K}: Kurzschlusskennlinie/-bereich
- K_{UE}: Überlastkennlinie/-bereich
- K_{KUE}: Übergangsbereich/Punkt
- Lₘ: Laststromkreisen
- U_{MIN}: Spannungs-/Minimalwert
- Uᵢₛₜ: Ist-Spannung
- U_{AC}: Ausgangsspannung
- SB: Stromrichterbetrieb
- S_{A}: Anzeigesignal
- P_{N}: Nennlast-Parameter
- Pₘₐₓ: Maximallast-Parameter

## Patentansprüche

1. Stromverteilungssystem (1) zum Anschluss an ein Wechselspannungsnetz (4), mit einem USV-Netzteil (2) zur unterbrechungsfreien Stromversorgung mit einem netzseitigen Eingang (E_{AC}) und mit mindestens einem Ausgang (A_{AC}), an welchen eine Anzahl von Lasten (10) in parallelen Laststromkreisen (Lₘ) anschließbar sind,
**dadurch gekennzeichnet,**
- **dass** in den oder jeden Laststromkreis (Lₘ) ein Schutzgerät (GSₘ) mit einem elektromechanischen Auslöser (12) und mit einer Auswerte- und Auslöseeinheit (17) geschaltet ist, welche anhand einer elektronischen Überlastkennlinie (K_{E}, K_{UE}) und/oder einer Kurschluss-Kennlinie (K_{E}, K_{K}) sowie in Abhängigkeit von der Ausgangsspannung (U_{AC}, Uᵢₛₜ) des USV-Netzteils (2) den Auslöser (12) betätigt und das Schutzgerät (GSₘ) auslöst,
- **dass** das Schutzgerät (GSₘ) einen Eingang (E₂) zur Eingabe eines die Maximallast des USV-Netzteils (2) repräsentierenden Parameters (Pₘₐₓ, I_{B}) in die Auswerte- und Auslöseeinheit (17) aufweist, wobei der die Maximallast des USV-Netzteils (2) repräsentierende Parameter (Pₘₐₓ, I_{B}) zum Abgleich des erfassten Ist-Stroms (Iᵢₛₜ) mit einer von diesem Parameter (Pₘₐₓ, I_{B}) abhängigen Überlast-Kennlinie (K_{USV}) des USV-Netzteils (2) dient, und/oder
- **dass** das Schutzgerät (GSₘ) einen Eingang (E₁) zur Eingabe eines die Nennlast der angeschlossenen Last (10) repräsentierenden Parameters (P_{N}, I_{A}) in die Auswerte- und Auslöseeinheit (17) aufweist.

2. Stromverteilungssystem (1) nach Anspruch 1,
**dadurch gekennzeichnet,**
**dass** der Auswerte- und Auslöseeinheit (17) die netzteilseitig erfasste Ausgangsspannung (U_{AC}, Uᵢₛₜ) des USV-Netzteils (2) und der in einem Auslösepfad (11) zwischen dem netzteilseitigen Ausgang (E_{L}, A_{AC}) und einem Lastausgang (A_{L}, Aₘ) des Schutzgerätes (GSₘ) erfasste Strom (I_{L}, Iᵢₛₜ) zugeführt sind.

3. Stromverteilungssystem (1) nach Anspruch 2,
**dadurch gekennzeichnet,**
**dass** die Auswerte- und Auslöseeinheit (17) das Schutzgerät (GSₘ) auslöst, wenn der erfasste Strom (Iᵢₛₜ) einen vorgegebenen Stromwert (I_{B}) überschreitet und die erfasste Ausgangsspannung (U_{AC}, Uᵢₛₜ) des USV-Netzteils (2) einen vorgegebenen Spannungswert (U_{MIN}) unterschreitet.

4. Stromverteilungssystem (1) nach einem der Ansprüche 1 bis 3,
**dadurch gekennzeichnet,**
**dass** die Auswerte- und Auslöseeinheit (17) anhand des eingegebenen, die Maximallast des USV-Netzteils (2) repräsentierenden Parameters (Pₘₐₓ, I_{B}) und/oder des eingegebenen, die Nennlast der angeschlossenen Last (10) repräsentierenden Parameters (P_{N}, I_{A}) die elektronische Kennlinie (K_{UE}, K_{K}) eines Überlastbereiches bzw. eines Kurzschlussbereiches bildet, deren Zeit-Strom-Wertepaare kleiner als diejenigen der Überlast-Kennlinie (K_{USV}) des USV-Netzteils (2), jedoch größer als diejenigen der angeschlossenen Last (Lₘ) bzw. des angeschlossenen Gerätes im Normal- oder Nennlastbetrieb sind.

5. Stromverteilungssystem (1) nach einem der Ansprüche 1 bis 4,
**dadurch gekennzeichnet,**
**dass** eine Auslösung des Schutzgerätes (GSₘ) im betroffenen Laststromkreisen (Lₘ) nur dann erfolgt, wenn bei Überschreiten der Überlast-Kennlinie (K_{USV}) des USV-Netzteils (2) durch den erfassten Ist-Stroms (lᵢₛₜ) die erfasste Ausgangsspannung (U_{AC}, Uᵢₛₜ) des Netzteils (2) einen Spannungsgrenzwert (U_{MIN}) unterschreitet.

6. Stromverteilungssystem (1) nach einem der Ansprüche 1 bis 5,
**dadurch gekennzeichnet,**
**dass** sich die elektronische Kennlinie (K_{UE}) für Überlast und die die Maximallast (Pₘₐₓ, I_{B}) des USV-Netzteils (2) im Kurzschlussfall repräsentierende elektronische Kennlinie (K_{K}) der Auswerte- und Auslöseeinheit (17) des Schutzgerätes (GSₘ) in einem Kennlinienbereich (K_{KUE}) treffen.

7. Stromverteilungssystem (1) nach Anspruch 6,
**dadurch gekennzeichnet,**
**dass** bei einer Überschreitung der elektronischen Kennlinie (K_{E}, K_{UE}) für Überlast und/oder der elektronischen Kennlinie (K_{E}, K_{K}) im Kurzschlussfall die von der Auswerte- und Auslöseeinheit (17) initiierte Auslösung des Schutzgerätes (GSₘ) erfolgt.

8. Stromverteilungssystem (1) nach einem der Ansprüche 1 bis 7,
**dadurch gekennzeichnet,**
**dass** die elektronischen Kennlinien (K_{E}, K_{K}) der Auswerte- und Auslöseeinheit (17) denjenigen maximal möglichen Laststrom (I_{L}) im Stromrichterbetrieb (SB) des USV-Netzteils (2) repräsentiert, bei welchem dessen Ausgangsspannung (U_{AC}) einen definierten Spannungsgrenzwert (U_{MIN}) nicht unterschreitet.

## Claims

1. Power distribution system (1) for connection to an AC voltage network (4), having a UPS power supply unit (2) for the uninterruptible supply of power having a network-side input (E_{AC}) and having at least one output (A_{AC}) to which a number of loads (10) in parallel load circuits (Lₘ) are able to be connected,
**characterized in that**
- a protective device (GSₘ) having an electromechanical trigger (12) and having an evaluation and trigger unit (17) is connected in the or each load circuit (Lₘ), which evaluation and trigger unit actuates the trigger (12) and triggers the protective device (GSₘ) based on an electronic overload characteristic curve (K_{E}, K_{UE}) and/or a short-circuit characteristic curve (K_{E}, K_{K}) and depending on the output voltage (U_{AC}, U_{actual}) of the UPS power supply unit (2),
- the protective device (GSₘ) has an input (E₂) for inputting a parameter (Pₘₐₓ, I_{B}) representing the maximum load of the UPS power supply unit (2) into the evaluation and trigger unit (17), wherein the parameter (Pₘₐₓ, I_{B}) representing the maximum load of the UPS power supply unit (2) serves to match the detected actual current (I_{actual}) to an overload characteristic curve (K_{UPS}) of the UPS power supply unit (2) dependent on said parameter (Pₘₐₓ, I_{B}), and/or
- the protective device (GSₘ) has an input (E₁) for inputting a parameter (P_{N}, I_{A}) representing the rated load of the connected load (10) into the evaluation and trigger unit (17).

2. Power distribution system (1) according to Claim 1,
**characterized in that**
the output voltage (U_{AC}, U_{actual}) of the UPS power supply unit (2) detected on the power supply unit side and the current (I_{L}, I_{actual}) detected in a trigger path (11) between the output (E_{L}, A_{AC}) on the power supply unit side and a load output (A_{L}, Aₘ) of the protective device (GSₘ) are fed to the evaluation and trigger unit (17).

3. Power distribution system (1) according to Claim 2,
**characterized in that**
the evaluation and trigger unit (17) triggers the protective device (GSₘ) when the detected current (I_{actual}) exceeds a prescribed current value (I_{B}) and the detected output voltage (U_{AC}, U_{actual}) of the UPS power supply unit (2) falls below a prescribed voltage value (U_{MIN}).

4. Power distribution system (1) according to one of Claims 1 to 3,
**characterized in that**,
based on the input parameter (Pₘₐₓ, I_{B}) representing the maximum load of the UPS power supply unit (2) and/or the input parameter (P_{N}, I_{A}) representing the rated load of the connected load (10), the evaluation and trigger unit (17) forms the electronic characteristic curve (K_{UE}, K_{K}) of an overload range or of a short-circuit range whose time/current value pairs are lower than those of the overload characteristic curve (K_{UPS}) of the UPS power supply unit (2) but greater than those of the connected load (Lₘ) or of the connected device during normal or rated-load operation.

5. Power distribution system (1) according to one of Claims 1 to 4,
**characterized in that**
the protective device (GSₘ) in the affected load circuits (Lₘ) is triggered only when, in the event of the detected actual current (I_{actual}) exceeding the overload characteristic curve (K_{UPS}) of the UPS power supply unit (2), the detected output voltage (U_{AC}, U_{actual}) of the power supply unit (2) falls below a voltage limit value (U_{MIN}).

6. Power distribution system (1) according to one of Claims 1 to 5,
**characterized in that**
the electronic characteristic curve (K_{UE}) for overload and the electronic characteristic curve (K_{K}) of the evaluation and trigger unit (17) of the protective device (GSₘ) that represents the maximum load (Pₘₐₓ, I_{B}) of the UPS power supply unit (2) in the event of a short circuit meet in a characteristic curve range (K_{KUE}).

7. Power distribution system (1) according to Claim 6,
**characterized in that**
the triggering of the protective device (GSₘ) initiated by the evaluation and trigger unit (17) is effected when the electronic characteristic curve (K_{E}, K_{UE}) for overload and/or the electronic characteristic curve (K_{E}, K_{K}) in the event of a short circuit are/is exceeded.

8. Power distribution system according to one of Claims 1 to 7,
**characterized in that**
the electronic characteristic curves (K_{E}, K_{K}) of the evaluation and trigger unit (17) represent that maximum possible load current (I_{L}) during power converter operation (SB) of the UPS power supply unit (2) at which the output voltage (U_{AC}) thereof does not fall below a defined voltage limit value (U_{MIN}).

## Revendications

1. Système de distribution d'énergie (1), destiné à être raccordé à un réseau de tension alternative (4), comprenant un adaptateur secteur USV (2) d'alimentation sans interruption pourvu d'une entrée côté réseau (E_{AC}) et d'au moins une sortie (A_{AC}), à laquelle un certain nombre de charges (10) peuvent être raccordées en circuits de charge parallèles (Lₘ), **caractérisé**
- **en ce qu'**une unité de protection (GSₘ), comportant un déclencheur électromécanique (12) et une unité d'évaluation et de déclenchement (17), est montée dans le ou chaque circuit de charge (Lₘ), laquelle unité de protection actionne le déclencheur (12) et déclenche l'unité de protection (GSₘ) sur la base d'une courbe caractéristique de surcharge électronique (K_{E}, K_{UE}) et/ou d'une courbe caractéristique de court-circuit (K_{E}, K_{K}) ainsi qu'en fonction de la tension de sortie (U_{AC}, Uᵢₛₜ) de l'adaptateur secteur USV (2),
- **en ce que** l'unité de protection (GSₘ) comporte une entrée (E₂) pour la fourniture en entrée à l'unité d'évaluation et de déclenchement (17) d'un paramètre (Pₘₐₓ, I_{B}) représentant la charge maximale de l'adaptateur secteur USV (2), dans lequel le paramètre (Pₘₐₓ, I_{B}) représentant la charge maximale de l'adaptateur secteur USV (2) est utilisé pour ajuster le courant réel détecté (Iᵢₛₜ) par rapport à une courbe caractéristique de surcharge (K_{USV}) de l'adaptateur secteur USV (2) qui dépend dudit paramètre (Pₘₐₓ, I_{B}), et/ou
- **en ce que** l'unité de protection (GSₘ) comporte une entrée (E₁) permettant de fournir en entrée à l'unité d'évaluation et de déclenchement (17) un paramètre (P_{N}, I_{A}) représentant la charge nominale de la charge raccordée (10).

2. Système de distribution d'énergie (1) selon la revendication 1, **caractérisé en ce que** la tension de sortie (U_{AC}, Uᵢₛₜ) détectée côté adaptateur secteur de l'adaptateur secteur USV (2) et le courant (I_{L}, Iᵢₛₜ) détecté sur un trajet de déclenchement (11) entre la sortie (E_{L}, A_{AC}) côté adaptateur secteur et une sortie de charge (A_{L}, Aₘ) de l'unité de protection (GSₘ) sont délivrés à l'unité d'évaluation et de déclenchement (17) .

3. Système de distribution d'énergie (1) selon la revendication 2, **caractérisé en ce que** l'unité d'évaluation et de déclenchement (17) déclenche l'unité de protection (GSₘ) lorsque le courant détecté (Iᵢₛₜ) dépasse une valeur de courant prédéterminée (I_{B}) et lorsque la tension de sortie détectée (U_{AC}, Uᵢₛₜ) de l'adaptateur secteur USV (2) s'abaisse en-dessous d'une valeur de tension prédéterminée (U_{MIN}).

4. Système de distribution d'énergie (1) selon l'une des revendications 1 à 3, **caractérisé en ce que** l'unité d'évaluation et de déclenchement (17) établit, sur la base du paramètre (Pₘₐₓ, I_{B}) fourni en entrée et représentant la charge maximale de l'adaptateur secteur USV (2) et/ou du paramètre (P_{N}, I_{A}) fourni en entrée et représentant la charge nominale de la charge raccordée (10), la courbe caractéristique électronique (K_{UE}, K_{K}) d'une plage de surcharge ou d'une plage de court-circuit dont des paires de valeurs temps-courant sont inférieures à celles de la courbe caractéristique de surcharge (K_{USV}) de l'adaptateur secteur USV (2), mais supérieures à celles de la charge raccordée (Lₘ) ou de l'appareil raccordé en fonctionnement normal ou nominal.

5. Système de distribution d'énergie (1) selon l'une des revendications 1 à 4, **caractérisé en ce que** l'unité de protection (GSₘ) n'est déclenchée dans le circuit de courant de charge (Lₘ) concerné que si, lorsque le courant réel (Iᵢₛₜ) détecté dépasse la caractéristique de surcharge (K_{USV}) de l'adaptateur secteur (2), la tension de sortie (U_{AC}, Uᵢₛₜ) de l'adaptateur secteur (2) s'abaisse en-dessous d'une valeur limite de tension (U_{MIN}).

6. Système de distribution d'énergie (1) selon l'une des revendications 1 à 5, **caractérisé en ce que** la courbe caractéristique électronique (K_{UE}) de surcharge et la courbe caractéristique électronique (K_{K}) représentant la charge maximale (Pₘₐₓ, I_{B}) de l'adaptateur secteur USV (2) de l'unité d'évaluation et de déclenchement (17) de l'unité de protection (GSₘ) en cas de court-circuit se situent dans une plage de courbes caractéristiques (K_{KUE}).

7. Système de distribution d'énergie (1) selon la revendication 6, **caractérisé en ce que**, en cas de dépassement de la courbe caractéristique électronique (K_{E}, K_{UE}) de surcharge et/ou de la courbe caractéristique électronique (K_{E}, K_{K}) en cas de court-circuit, le déclenchement de l'unité de protection (GSₘ) initié par l'unité d'évaluation et de déclenchement (17) est effectué.

8. Système de distribution d'énergie (1) selon l'une des revendications 1 à 7, **caractérisé en ce que** les courbes caractéristiques électroniques (K_{E}, K_{K}) de l'unité d'évaluation et de déclenchement (17) représentent le courant de charge maximal possible (I_{L}), dans le mode redresseur (SB) de l'adaptateur secteur USV (2), pour lequel sa tension de sortie (U_{AC}) ne s'abaisse pas en-dessous d'une valeur limite de tension définie (U_{MIN}).
